# EUROPÄISCHE PATENTSCHRIFT

(11) **EP 0 621 823 B1**
(45) Veröffentlichungstag und Bekanntmachung des Hinweises auf die Patenterteilung: **03.07.1996**
(21) Anmeldenummer: 93922512.4
(22) Anmeldetag: 04.10.1993
(51) Int. Cl.: B29C 65/06, B06B 1/16

(54) **VORRICHTUNG ZUR VERBINDUNG VON BAUTEILEN DURCH VIBRATIONSSCHWEISSUNG**
DEVICE FOR BONDING COMPONENTS BY MEANS OF VIBRATION WELDING
DISPOSITIF VISANT A ASSEMBLER DES COMPOSANTS PAR SOUDAGE PAR VIBRATION

(30) Priorität: 09.10.1992 DE 4233929
(43) Veröffentlichungstag der Anmeldung: 02.11.1994
(73) Patentinhaber: KLN ULTRASCHALL GMBH, D-64646 Heppenheim (DE)
(72) Erfinder: DUNGS, Manfred, D-63801 Kleinostheim (DE)
(74) Vertreter: Helber, Friedrich G., Dipl.-Ing.
(86) Internationale Anmeldenummer: EP9302704
(87) Internationale Veröffentlichungsnummer: WO9408778

(56) Entgegenhaltungen:
- DE-A- 4 034 821
- DE-U- 9 201 744
- FR-A- 1 055 503

## Beschreibung

Die Erfindung betrifft eine Vorrichtung zur Verbindung wenigstens eines Bauteils mit einem weiteren starr gehaltenen Bauteil mittels Vibrationsschweißung, mit einem Vibrationsschweißkopf mit einem Antriebsmotor, dessen Abtriebswelle mit einem Exzenterantrieb gekoppelt ist, welcher die Rotationsenergie des Antriebsmotors in eine zwangsläufige, oszillierende Schwingungsbewegung eines im Rahmen der vorgesehenen Arbeitsamplitude schwingungsfähig am Vibrationsschweißkopf gehalterten Aufnahmewerkzeugs für den mit dem starr gehalterten Bauteil zu verbindenden Bauteil umsetzt, wobei dem schwingend angetriebenen Aufnahmewerkzeug ein Aufnahmewerkzeug für den starr zu halternden Bauteil gegenüberstehend angeordnet und eine Vorschubeinheit vorgesehen ist, mittels welcher die Aufnahmewerkzeuge in Richtung aufeinanderzu zustellbar und voneinandenweg zurückziehbar sind.

Zur Verbindung von Bauteilen, von denen wenigstens einer aus thermoplastischem Material hergestellt ist, werden in neuerer Zeit zunehmend Vibrationsschweißgeräte verwendet, bei welchen die zu verbindenden Bauteile zunächst mit unter maßigem Druck aneinander anliegenden Fügeflächen in eine oszillierende Hin- und Herbewegung gesetzt werden. Durch die dabei entstehende Reibungswärme wird das thermoplastische Material erweicht. Sobald eine hinreichende Erweichung erzielt ist, wird die Schwingungsbewegung abgeschaltet und auf die zueinander ausgerichteten Bauteile wird rechtwinklig zur Schwingungsrichtung ein Druck ausgeübt, welcher die Teile nach dem Erkalten des plastifizierten Materials homogen und belastbar verbindet. Bei den bekannten, für die Verbindung größerer Teile bestimmten Vibrationsschweißgeräten wird das den in Schwingungen zu versetzenden Bauteil aufnehmende Werkzeug durch Federn schwingungsfähig gehaltert und durch einen motorisch angetriebenen Exzenterantrieb oder einen hydraulischen oder elektromagnetischen Antrieb in Schwingungen versetzt (z.B. FR-OS 2 234 810, DE-PS 25 39 167). Durch entsprechende Ausgestaltung des Aufnahmewerkzeugs mit mehreren Einzelaufnahmen ist es auch möglich, gleichzeitig mehrere Einzelbauteile mit einem größeren Bauteil zu verbinden, wobei dann aber die Fügeflächen der Einzelbauteile und des größeren Bauteils nach Möglichkeit in der gleichen oder parallelen Ebenen liegen sollten, um eine gleichmäßige Plastifizierung der Fügeflächen durch die Reibungswärme zu erzielen. In der Praxis werden auch Teile mit nicht exakt in der gleichen oder parallelen Ebenen liegenden Fügeflächen verschweißt, wobei jedoch bei stärker abweichenden Fügeebenen eine Verschlechterung der Festigkeit infolge der nicht optimalen Plastifizierung in Kauf genommen werden muß. In Fällen, in denen mehrere Teile an einem Grundteil in stark voneinander abweichenden Fügeebenen befestigt werden müssen, ist es nicht möglich, mit einem Aufnahmewerkzeug für mehrere Bauteile zu arbeiten. Die Bauteile müssen dann einzeln oder in kleinen Gruppen in gesonderten Vibrationsschweißgeräten nacheinander auf dem Basisbauteil befestigt werden.

Um eine optimale Festigkeit der Verbindung von Einzelbauteilen mit einem Basisbauteil zu erhalten, deren Fügeflächen in nicht parallelen Ebenen liegen, wurde in den Abmessungen verkleinerter Vibrationsschweißköpfe entwickelt (DE-OS 40 34 821), bei denen der eigentliche durch einen elektromotorisch angetriebenen Exzenter- oder Kurventrieb in Schwingungen versetzte eigentliche Schwingkopf an dem mit dem Antriebsmotor versehenen Gehäuse, an dem die Vorschubeinheit zur Ausübung des Fügedrucks angreift, durch eine Linearführung in Form einer Nadelkäfig-Prismenführung geführt ist. Solche Linearführungen sind aber im Augenblick des Fügevorgangs hoch beansprucht und stellen somit einen kritischen Verschleißteil dar.

Der Erfindung liegt demgegenüber die Aufgabe zugrunde, eine Vorrichtung zur Verbindung wenigstens eines Bauteils mit einem Basisbauteil zu schaffen, welche einen Vibrationsschweißkopf aufweist, der konstruktiv einfach aufgebaut ist und eine hohe Lebensdauer aufweist.

Ausgehend von einer Vorrichtung der eingangs erwähnten Art wird diese Aufgabe erfindungsgemäß dadurch gelöst, daß der Vibrationsschweißkopf ein massives langgestrecktes Gehäuse aufweist, auf dessen einer Stirnseite der Antriebsmotor und auf dessen anderer Stirnseite ein mit dem Aufnahmewerkzeug für den zu verbindenden Bauteil bestückbarer Schwingkopf mittels wenigstens zweier langgestreckter Blattfedern gehaltert ist, deren Enden einerseits auf gegenüberliegenden Seiten des Schwingkopfs und andererseits im antriebsmotorzugewandten Endbereich des Gehäuses befestigt sind, wobei die Antriebswelle des Antriebsmotors über eine durch das Gehäuse geführte Verbindungswelle mit dem vor die motorabgewandte Stirnseite des Gehäuses ins Innere des Schwingkopfs geführten Exzenterantrieb verbunden ist. Hierdurch wird ein sehr kompakter Aufbau des Vibrationsschweißkopfs erhalten, der erforderlichenfalls auch den Aufbau von Vibrationsschweiß-Vorrichtungen mit mehreren auf unterschiedliche Fügerichtungen einstellbaren Vibrationsschweißköpfen ermöglicht, so daß dann also auch die gleichzeitige Befestigung mehrerer kleinerer Bauteile an einen größeren Basisbauteil möglich ist, auch wenn die Verbindungsebenen der zu verbindenden Bauteile in nicht parallelen Ebenen liegen. Durch die Anbringung der gegenüberliegenden Enden der Blattfedern am Schwingkopf einerseits und am schwingkopfabgewandten Ende des langgestreckten Gehäuses andererseits haben die Federn eine so große Länge, daß die beim Oszillieren des Schwingkopfs durch die bogenförmige Auslenkung der schwingenden Federenden auftretende Bewegungskomponente des Schwingkopfs rechtwinklig zur Schwingungsebene vernachlässigbar gering wird. Infolge des zwangsläufigen Antriebs durch einen mechanischen Exzenterantrieb muß das Feder/Massesystem der Federn des Schwingkopfs auch nicht auf eine vorgegebene Ressonanzfrequenz abgestimmt werden, wie dies bei den für die Verbindung größerer Bauteile bestimmten, bekannten elektromagnetisch oder hydraulisch angetriebenen Vibrationsschweißmaschinen der Fall ist. Auch eine steife Auslegung der Federn derart, daß diese den Schwingkopf und somit das an ihm vorgesehene Aufnahmewerkzeug vor der Einleitung des Fügedrucks über die Vorschubeinheit in die vorgesehene zum Basisbauteil ausgerichtete Stellung führen, ist nicht erforderlich, weil durch den Exzenterantrieb die Ausrichtung der zu verbindenden Bauteile exakt angesteuert werden kann.

Der an seinem Umfang zylindrisch ausgeführte Exzenter des Exzenterantriebs ist bei einem ersten Ausführungsbeispiel der Erfindung drehfest auf dem motorabgewandten, in den Schwingkopf geführten Ende der drehbar im Gehäuse gelagerten Verbindungswelle angeordnet, wobei er auf seinem äußeren Umfang wenigstens einen drehbar auf ihm gelagerten Nockenring trägt, dessen bzw. deren äußere zylindrische Umfangsfläche(n) an auf gegenüberliegenden Seiten im Innern des Schwingkopfs parallel zu den Flachseiten der Blattfedern verlaufend ausgebildeten Druckflächen des Schwingkopfs abgestützt ist bzw. sind. Durch den drehbar gelagerten Nockenring wird verhindert, daß der Exzenter mit der relativ hohen Drehzahl direkt auf den Druckflächen gleitet, woraus ein schneller Verschleiß der Druckflächen resultieren könnte. Die drehbare Lagerung des Nockenrings bzw. der Nockenringe auf dem Exzenter erfolgt dabei vorzugsweise mittels Wälzkörpern, um durch Verringerung der Reibung sicherzustellen, daß die Außenfläche des Nockenrings sich auf den Druckflächen im Schwingkopf abwälzt, d.h. Verschleiß durch Reibung vermieden wird.

In einer bevorzugten Ausführungsform der Erfindung sind auf dem Exzenter zwei in Längsrichtung der Verbindungswelle zueinander versetzte, unabhängig voneinander drehbare Nockenringe gelagert, und die beiden Druckflächen im Schwingkopf sind den Nockenringen entsprechend derart seitlich zueinander versetzt, daß jedem Nockenring jeweils nur eine der Druckflächen zugeordnet ist. Dadurch ist sichergestellt, daß wahrend der ersten Hälfte der Schwingungsamplitude nur ein Nockenring an der zugeordneten Druckfläche und während der zweiten Hälfte der - entgegengesetzt gerichteten - Schwingungsbewegung nur der andere Nockenring an der zugeordneten zweiten Druckfläche wirksam wird, so daß der jeweilige Nockenring auf der zugeordneten Druckfläche eine reine Abwälzbewegung ausführt. Andererseits dreht sich der Exzenter in den Nockenringen, so daß die die Nockenringe lagernden Wälzkörper ständig umlaufen und deshalb gleichmäßig beansprucht werden.

Alternativ kann die Ausgestaltung bei einem weiterentwickelten Ausführungsbeispiel auch so getroffen sein, daß drei in Längsrichtung der Verbindungswelle zueinander versetzte, unabhängig voneinander drehbare Nokkenringe auf dem Exzenter gelagert sind, denen im Schwingungskopf drei in Längsrichtung entsprechend zueinander versetzte Druckflächen zugeordnet sind, von denen die eine, den mittleren Nockenring zugeordnete Druckfläche an der einen Seite und die beiden anderen, den äußeren Nockenringen zugeordneten Druckflächen auf der gegenüberliegenden Seite des Schwingkopfs angeordnet sind. Durch die gegenüber dem zuvor beschriebenen Ausführungsbeispiel getroffene Unterteilung eines der Nockenringe in zwei beidseitig vom mittleren Nockenring angeordnete, in ihrer Breite schmaler bemeßbare Nockenringe wird erreicht daß die den Schwingkopf jeweils auslenkenden resultierenden Kräfte in Abhängigkeit von der augenblicklichen Schwingungsrichtung stets in einer Ebene liegen.

Der Exzenter wird zweckmäßig abnehmbar und gegen Exzenter abweichender Exzentrizität austauschbar auf dem motorabgewandten Ende der Verbindungswelle angeordnet, so daß den Anforderungen unterschiedlicher Materialien entsprechend unterschiedliche Vibrationsamplituden einstellbar sind.

Die im Schwingkopf vorgesehenen Druckflächen sind vorzugsweise an gesondert hergestellten, demontierbar am Schwingkopf angeordneten Druckschienen vorgesehen, die also bei auftretendem Verschleiß einfach und schnell gegen Ersatz-Druckschienen ausgewechselt werden können.

In vorteilhafter Abwandlung der Erfindung kann der an seinem Umfang zylindrisch ausgeführte Exzenter des Exzenterantriebs wiederum drehfest auf dem motorabgewandten, in den Schwingkopf geführten Ende der drehbar im Gehäuse gelagerten Verbindungswelle angeordnet sein und auf seinem äußeren Umfang wenigstens einen drehbar auf ihm gelagerten Übertragungsring tragen, der denn jedoch - abweichend von den vorbeschriebenen Ausführungsbeispielen - über ein langgestrecktes Koppelglied mit dem Schwingkopf gekoppelt ist. Damit wird die Exzenter-Auslenkbewegung also direkt über das Koppelglied auf den Schwingkopf übertragen, wodurch der bei der Übertragung über die Außenflache des Nockenrings bzw. der Nockenringe auf die Druckflachen denkbare Verschleiß durch Einhämmern der Nockenringe in die Druckfläche vermieden werden kann.

Dabei kann das Koppelglied als Koppelstange ausgebildet sein, welche über einen vorgegebenen Winkel auslenkbar am Schwingkopf angeschlossen ist.

Um die Winkel-Auslenkung der Koppelstange zu ermöglichen, kann sie über ein Gelenk am Schwingkopf angeschlossen sein. Der Exzenterantrieb entspricht funktionell dann einem Kurbeltrieb.

Ohne gelenkigen Anschluß - beispielsweise über einen in einem Lagerauge am Ende der Koppelstange angeordneten, im Schwingkopf gehaltenen Gelenkbolzen - der Koppelstange am Schwingkopf kommt ein Ausführungsbeispiel aus, bei welchem die Koppelstange in der Ebene der Auslenkbewegung relativ zum Schwingkopf in sich elastisch verbiegbar ausgebildet und starr am Schwingkopf befestigt ist. Das Gelenk wird hierbei also durch die federnd verbiegbare Ausgestaltung der Koppelstange ersetzt.

Die Verbindungswelle wird in zweckmäßiger Weiterbildung der Erfindung über eine - vorzugsweise elastische - Kupplung, beispielsweise eine Federbalgkupplung mit der Abtriebswelle des Antriebsmotors gekoppelt.

Die Verbindungswelle wird im Gehäuse vorzugsweise in ihren beiden Endbereichen in Wälzlagern drehbar gelagert, wobei hierfür Wälzlager vorzusehen sind, welche für die für die zu erzeugenden Oszillationsfrequenzen erforderlichen Drehzahlen des Exzenters zugelassen sind.

Um die Schmierung dieser Wälzlager sicherzustellen, empfiehlt es sich dann, diese in beiden Lagerbereichen durch berührungslos abdichtende Labyrinthdichtungen gegen den Austritt von Schmiermittel abzudichten.

Zur Verringerung der durch den umlaufenden Exzenter zwangsläufig entstehenden Unwucht kann in zweckmäßiger Weiterbildung der Erfindung die Verbindungswelle im Bereich zwischen den beiden Lagerstellen mit einer Halterungseinrichtung zum Anbringen einer Auswuchtmasse versehen sein.

Zwischen der motorabgewandten Gehäuse-Stirnfläche und der dieser zugewandten Stirnfläche des Schwingkopfs wird mit Vorteil eine umlaufende Dichtung vorgesehen, welche in einer Aufnahme des Gehäuses bzw. eines dieses abschließenden Gehäusedeckels gehalten ist und an der Stirnfläche des Schwingkopfs bzw. einem diesen abschließenden Schwingkopf-Deckel abdichtend anliegt.

Der Antriebsmotor ist zweckmäßig ein auf die gewünschte Frequenz des Schwingungskopfs einstellbarer hochtouriger Elektromotor.

Insbesondere bei der direkten Kopplung des Exzenters mit dem Schwingkopf über ein Koppelglied ist eine Weiterbildung vorteilhaft, bei welcher auf dem motorabgewandten Ende der Verbindungswelle unmittelbar benachbart zwei Exzenter gleicher Exzentrizität um 180° zueinander versetzt angeordnet sind, auf denen jeweils ein Übertragungsring drehbar gelagert ist, wobei der Übertragungsring des zweiten Exzenters über ein langgestrecktes Koppelglied mit einer parallel zur Schwingungsrichtung des Schwingkopfs oszillierbar gehalterten Ausgleichsmasse gekoppelt ist, deren Masse im wesentlichen gleich der schwingenden Masse des Schwingkopfs sowie der bei angetriebenem Vibrationsschweißkopf mit dem Schwingkopf schwingenden Bauteile gewählt ist. Dadurch wird zwangsläufig eine dem Schwingkopf entsprechende Masse mit gleicher Frequenz und Amplitude um 180° phasenversetzt in Schwingung versetzt, wodurch ein vollständiger Massenausgleich erhalten wird, d.h. der Vibrationskopf keine Schwingungen von seinem Gehäuse auf seine Halterung im Gestell überträgt.

Als zweckmäßig hat sich dabei eine Ausgestaltung erwiesen, bei welcher die Ausgleichsmasse mittels wenigstens zweier langgestreckter und in ihren Federkennwerten den den Schwingkopf federnd haltenden Blattfedern entsprechenden Blattfedern am Gehäuse des Vibrationsschwingkopfs angeordnet ist, wobei die den Schwingkopf halternden Blattfedern und die die Ausgleichsmasse halternden Blattfedern jeweils in parallelem Abstand und auf gegenüberliegenden Seiten des Gehäuses angeordnet sind. Die beiden Feder-Schwingungssysteme sind also praktisch ineinandergeschachtelt, so daß sich die äußeren Abmessungen des Vibrationsschwingkopfs im Vergleich zu einem Vibrationsschwingkopf ohne den Massenausgleich nicht wesentlich erhöhen.

Zur Aufbringung des Fügedrucks auf die zu verbindenden Bauteile nach Erwärmung der Fügeflächen durch die erzeugte Reibung kann entweder der Vibrationsschweißkopf insgesamt in Richtung auf das den starr zu halternden Bauteil aufnehmende Aufnahmewerkzeug vorschieb- und in entgegengesetzte Richtung zurückziehbar im Gestell der Vorrichtung gehaltert sein, wobei die Vorschubeinheit dann am Vibrationsschweißkopf einerseits und am Gestell andererseits angreift, oder das den beim Verbindungsvorgang starr zu halternden Bauteil aufnehmende Aufnahmewerkzeug wird an einem Schlitten angeordnet, welcher im Gestell der Vorrichtung in Richtung auf den starr im Gestell gehalterten Vibrationsschweißkopf verschieblich gehaltert ist, wobei die Vorschubeinheit dann am Gestell einerseits und dem Schlitten andererseits angreift. Die starre Halterung des Vibrationsschweißkopfs bedeutet in diesem Zusammenhang nicht, daß der Vibrationsschweißkopf nicht relativ zum Gestell auch verstellbar gehaltert wird, sondern lediglich, daß er nach erfolgter Einstellung starr mit dem Gestell verbunden wird, und daß der Füge-Vorschub über den im Gestell gehalterten Schlitten erfolgt.

Die Erfindung ist in der folgenden Beschreibung mehrerer Ausführungsbeispiels in Verbindung mit der Zeichnung näher erläutert, und zwar zeigt:
- Fig. 1: eine Seitenansicht einer mit einem in der erfindungsgemäßen Weise ausgebildeten Vibrationsschweißkopf arbeitenden Vibrationsschweiß-Vorrichtung in schematischer Darstellung;
- Fig. 2: eine Seitenansicht eines in der erfindungsgemäßen Weise ausgebildeten Vibrationsschweißkopfs;
- Fig. 3: einen Längsmittelschnitt durch den in Fig. 1 gezeigten Vibrationsschweißkopf;
- Fig. 4: eine Schnittansicht, gesehen in Richtung der Pfeile 3-3 in Fig. 2;
- Fig. 5: das schwingkopfseitige Ende eines abgewandelten Vibrationsschweißkopfs in einer in der Schnittführung der Fig. 3 entsprechenden Schnittansicht;
- Fig. 6: einen in der Schnittführung der Darstellung gemäß den Fig. 3 und 5 entsprechenden Längsmittelschnitt durch ein in bezug auf die Übertragung der Exzenterbewegung auf den Schwingkopf abgewandeltes Ausführungsbeispieles eines erfindungsgemäßen Vibrationsschweißkopfs mit einem zusätzlichen Ausgleichsmassen-System zur Verhinderung des Auftretens äußerer Schwingungen im Gehäuse des Vibrationsschweißkopfs; und
- Fig. 7: eine Schnittansicht, gesehen in Richtung der Pfeile 7-7 in Fig. 6.

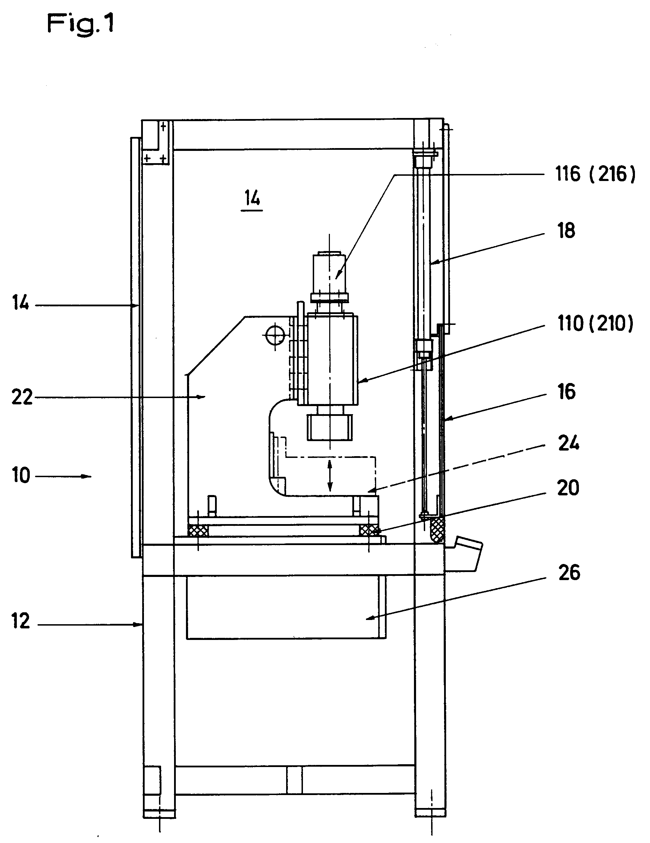

Figur 1 zeigt schematisch den Aufbau eine in ihrer Gesamtheit mit 10 bezeichnete Vibrations-Schweißvorrichtung, welche ein Gestell 12 aus Stahlprofilen aufweist, das in seinem oberen Bereich durch Verkleidungen mit schalldämmenden Wandtafeln 14 mit einer das Austreten des beim Vibrationsschweißen entstehenden Arbeitsgeräuschs mindernden Schall-Abschirmung versehen ist. An der in der Zeichnung rechts liegenden Seite weist die Abschirmung eine durchsichtige, wahlweise zum Beschicken der Vorrichtung mit zu verschweißenden Bauteilen und zum Entnehmen der fertig verschweißten Bauteile durch Hochschieben zu öffnende und durch Absenken wieder zu schließende Schiebetür 16 aus Glas oder einem durchsichtigen Kunststoff auf, welche durch eine druckmittelbeaufschlagbare Kolben-Zylinder-Einheit 18 betätigbar ist.

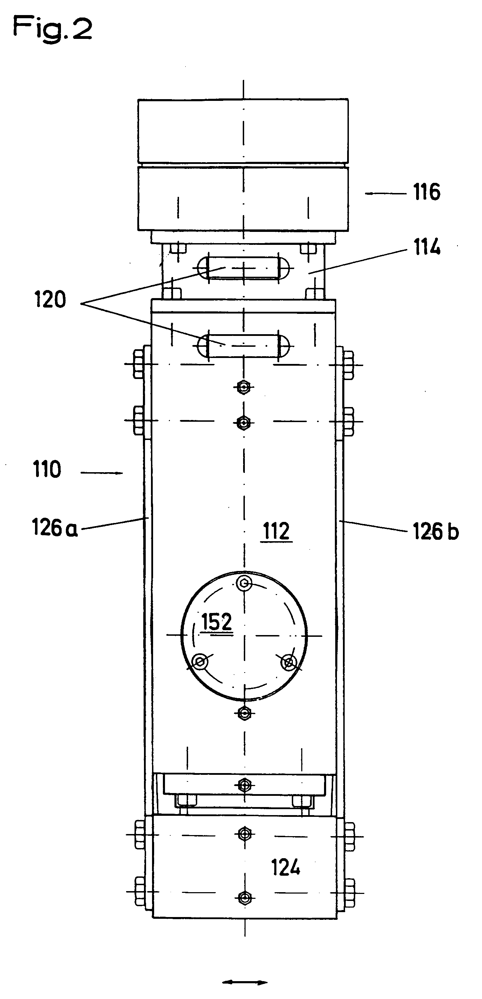

Im Innern des gegen Schallaustritt abgeschirmten Gestellbereichs sind die eigentlichen Funktionsbaugruppen der Vorrichtung angeordnet. Vom rückwärtigen Bereich einer starr im Gestell 12 aufgelagerten Trägerplattform 20 ist ein am freien Ende nach vorn abgekröpfter Ständer 22 aufgebaut, der an seinem freien abgekröpften Ende einen der in der erfindungsgemäßen Weise ausgebildeten, im folgenden in Verbindung mit den Figuren 2 bis 4 oder 5 bzw. 6 und 7 noch näher beschriebenen Vibrationsschweißkopf 110 bzw. 210 trägt, welcher im speziellen Fall - zur Anpassung an unterschiedliche Größen von zu verschweißenden Bauteilen bzw. der sie halternden Werkstückaufnahmen - in senkrechter Richtung verstellbar und dann in der gewählten Höhenstellung starr mit dem Ständer 22 verbindbar ist. Unterhalb des Vibrationsschweißkopfs ist auf der Trägerplattform ein in senkrechter Richtung zustellbarer Schlitten 24 vorgesehen, auf bzw. in welchem das das beim Vibrationsschweißvorgang in horizontaler Richtung starr zu halternde Bauteil aufnehmende Aufnahmewerkzeug so angeordnet wird, daß es in senkrechter Richtung dem beim Schweißvorgang in horizontale Schwingungen zu versetzenden, am Vibrationsschweißkopf angeordneten Aufnahmewerkzeug gegenübersteht. Durch Zustellung des Schlittens 24 können die in den - nicht gezeigten - Aufnahmewerkzeugen gehaltenen Bauteile also im Bereich ihrer zu verbindenden Flächen in Anlage aneinander gefahren werden, worauf der Vibrationsschweißkopf aktiviert und so der in dem am Vibrationsschweißkopf vorzusehenden Aufnahmewerkzeug gehaltene Bauteil in Schwingungen versetzt wird. In den unter leichtem Druck aneinanderliegenden Fügeflächen der zu verschweißenden Bauteile entsteht dabei Reibungswärme. Sobald das Material in den Fügeflächen hinreichend bildsam geworden ist, wird der Vibrationsschweißkopf ausgeschaltet und der Schlitten 24 zusätzlich im Sinne einer Zusammenpressung der Werkstücke zugestellt, wodurch die beiden Bauteile im Bereich ihrer Fügefläche miteinander verbunden werden.

Die für die Steuerung des Vibrationsschweißkopfs und die Zustellung des Schlittens erforderlichen Regel- und Steuereinheiten sind in dem im Gestell unterhalb der Trägerplattform 20 eingezeichneten Steuerkasten 26 zusammengefaßt.

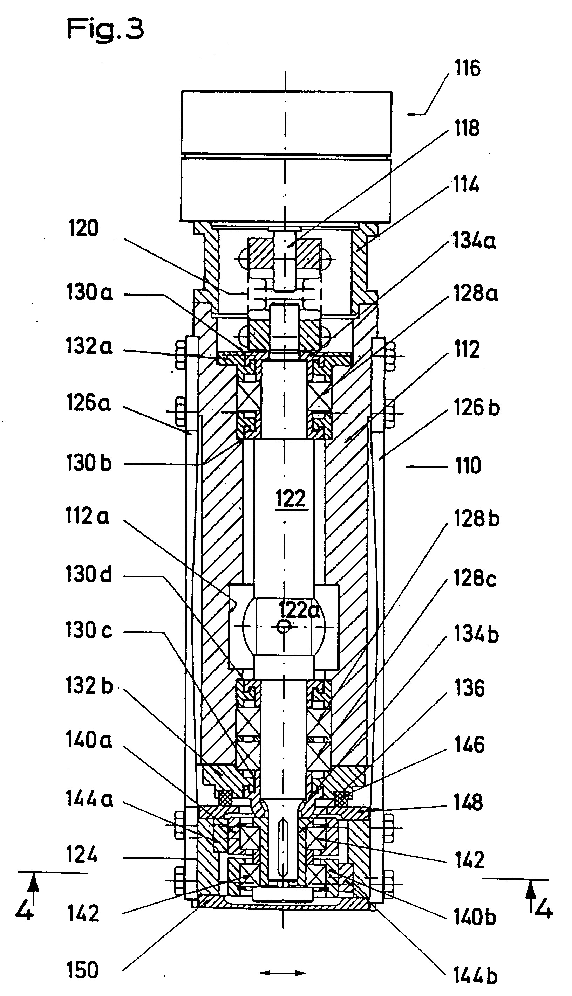

In den Figuren 2 bis 4 ist ein erstes Ausführungsbeispiel eines in der erfindungsgemäßen Weise ausgebildeten, in seiner Gesamtheit mit 110 bezeichneten Vibrationsschweißkopfes gezeigt, welcher ein langgestrecktes massives Gehäuse 112 von - im dargestellten Fall - quadratischen Querschnitt aufweist, an dessen in den Figuren 2 und 3 oben gelegener Stirnseite über ein Zwischengehäuse 114 ein Elektromotor 116 angeflanscht ist. Die Abtriebswelle 118 des Elektromotors 116 ist über eine elastische Faltenbalgkupplung 120 mit einer das Innere des Gehäuses 112 durchsetzenden Verbindungswelle 122 gekoppelt, deren motorabgewandtes Ende aus der gegenüberliegenden Stirnseite des Gehäuses 112 in einen - im Querschnitt ebenfalls quadratisch begrenzten - Schwingkopf 124 vortritt, der seinerseits mittels zweier auf gegenüberliegenden Flachseiten an ihm angeschraubter langgestreckter Blattfedern 126a, 126b vor der Gehäuse-Stirnseite gehaltert ist. Andererseits sind die gehäuseseitigen Enden der Blattfedern im motorseitigen Endbereich des Gehäuses auf gegenüber den eigentlichen Gehäuse-Seitenflächen etwas vortretenden Abschnitten aufgeschraubt, so daß der Schwingkopf 124 unter elastischer Verbiegung der beiden Blattfedern 126a, 126b in der in den Figuren 2 und 3 durch die unterhalb des Schwingkopfs eingetragenen Pfeile veranschaulichten Richtung hin- und herschwingen kann.

Die Verbindungswelle ist in den beiden Endbereichen des Gehäuses in Lagern 128a bzw. 128b, 128c drehbar gelagert, und die Lagerstellen ihrerseits sind im Gehäuse durch berührungslos abdichtende Labyrinthdichtungen 130a, 130b und 130c, 130d gegen den Austritt von Schmiermittel und das Eindringen von Verunreinigungen abgedichtet. Die das Gehäuse 112 stirnseitig nach außen abdichtenden Dichtlabyrinthe sind dabei zwischen drehfest mit dem Gehäuse verschraubten Abschlußdeckeln 132a, 132b und jeweils auf der Verbindungswelle 122 aufgepreßten Dichtelementen 134a, 134b ausgebildet.

Auf dem in den Schwingkopf 124 vorstehenden Ende der Verbindungswelle 122 ist ein Exzenter 136 durch einen Keil 38 gegen Verdrehung gesichert aufgesetzt. Der an seiner äußeren Umfangsfläche zylindrische Exzenter trägt zwei seitlich benachbarte zylindrische Nockenringe 140a, 140b, welche durch je ein Wälzlager 142 drehbar auf dem Exzenter 136 gelagert sind. Innerhalb des Schwingkopfs 124 sind auf gegenüberliegenden Seiten zu je einem der Nockenringe 140a, 140b ausgerichtet kurze Druckschienen 144a, 144b eingeschraubt, deren zur Mitte des Schwingkopfs 124 weisende Flachseite jeweils am zugeordneten Nockenring 140a, 140b anliegt und somit jeweils eine Druckfläche des Schwingkopfs bildet, über welche die Exzenterbewegung des über die Verbindungswelle 122 vom Motor 116 angetriebenen Exzenters übertragen wird. Die Druckschienen 144a, 144b sind im Schwingkopf 124 eingeschraubt, d.h. austauschbar, so daß sie also bei Verschleiß nachgearbeitet bzw. ersetzt werden können.

Es ist nunmehr ersichtlich, daß die Abtriebsdrehbewegungen des Elektromotors 116 über die Verbindungswelle 122 in eine Drehbewegung des Exzenters umgesetzt wird. Infolge der Exzentrizität der äußeren Umfangsfläche des Exzenters in bezug auf die Längsmittelachse seiner Innenbohrung versetzt der Exzenter die an den Druckschienen 144a, 144b abgestützten Nockenringe 140a, 140b in eine Taumelbewegung, welche von den Nockenringen über die Druckschienen 144a, 144b in die erwähnte, durch die in den Figuren 2 und 3 eingetragenen gegensinnigen Pfeile veranschaulichte oszillierende Bewegungen des Schwingkopfs 124 umgesetzt wird. Die Amplitude dieser Schwingung ist gleich der zweifachen Exzentrizität des Exzenters 136 und ist durch Austausch des Exzenters 136 gegen einen Exzenter abweichende Exzentrizität veränderbar. Gegen das Eindringen von Verunreinigungen bzw. den Austritt von Schmiermittel aus dem Schwingkopf 124 ist dieser gehäuseseitig durch einen umlaufenden Dichtring 146 abgedichtet, der in einer Nut im Gehäusedeckel 132b gehalten und auf der ebenen Gegenfläche eines mit dem Schwingkopfs verschraubten Deckels 148 abdichtet. Auf der gegenüberliegenden Seite des Schwingkopfs 124 ist dieser durch einen weiteren Deckel 150 verschlossen, der seinerseits gleichzeitig zur Befestigung des Aufnahmewerkzeugs für den durch Vibrationsschweißung an einem starr gehalterten - für den eigentlichen Fügevorgang aber zustellbaren - Basisbauteil zu befestigenden Bauteil dient.

In Figur 3 ist noch erkennbar, daß die Verbindungswelle 122 in einem mittleren Bereich einen Abschnitt geringeren Durchmessers 122a aufweist, dem im Gehäuse eine Ausdrehung 112a zugeordnet ist. Auf dem im Durchmesser verringerten Abschnitt 122a kann eine die Unwucht des Exzenters kompensierende Auswuchtmasse angebracht werden, wofür das Gehäuseinnere durch den in Fig. 2 erkennbaren Deckel 152 zugänglich ist.

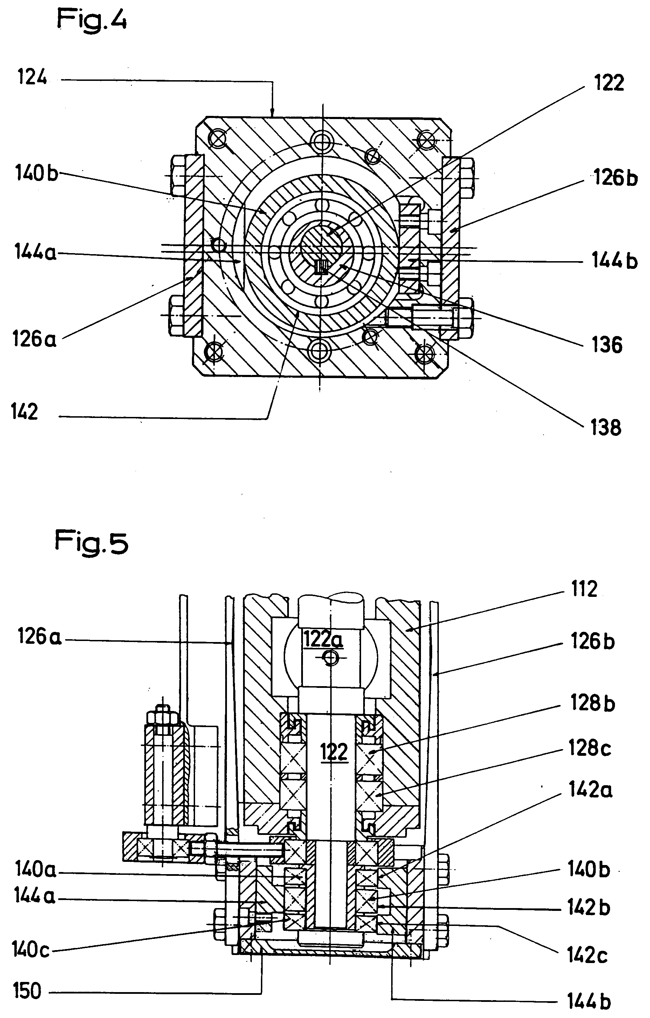

In Figur 5 ist eine Abwandlung des vorstehend in Verbindung mit den Fig. 2 bis 3 beschriebenen Vibrationsschweißkopfs 110 dargestellt, welche sich nur auf die Übertragung der Taumelbewegung des Exzenters 116 auf den Schwingkopf 124 bezieht. Anstelle von zwei Nockenringen 140a, 140b sind nunmehr drei solcher Nockenringe 140a, 140b, 140c in Längsrichtung aufeinanderfolgend auf dem Ende der Verbindungswelle 122 angeordnet, welche im dargestellten Fall direkt von den Außenringen von Wälzlagern 142a, 142b, 142c gebildet werden. Der mittlere breiter bemessene Nockenring 140b ist an einer entsprechend breit bemessenen Druckfläche der in der Fig. 5 im Schwingkopf links von der Verbindungswelle befestigten Druckschiene 144a abgestützt, während die beiden schmaler bemessenen Nockenringe 140a, 140c an zugeordneten Druckflächen der gegenüberliegend im Schwingkopf 124 befestigten Druckschiene 144b abgestützt sind.

Es ist ersichtlich, daß durch diese Aufteilung der beim ersten Ausführungsbeispiel zwei Nockenringe in nunmehr einen mittleren breiteren Nockenring 140b und zwei beidseitig des mittleren Nockenrings angeordnete schmalere Nockenringe 140a, 140c, die die Oszillationsbewegung des Schwingkopfs 124 erzeugenden resultierenden Kräfte entgegengesetzt gerichtet sind, jedoch in der gleichen Ebene am Schwingkopf angreifen.

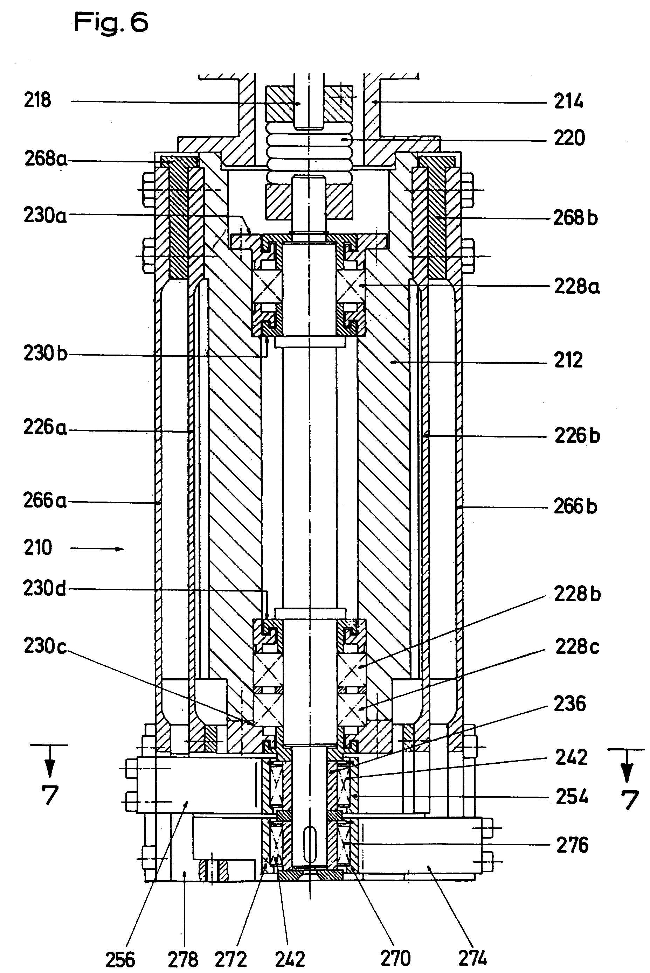

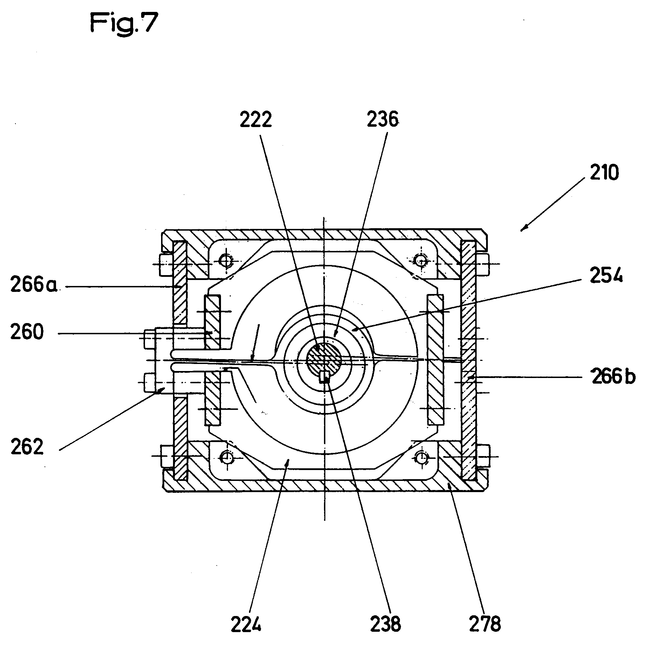

In Figur 6 und 7 ist ein drittes Ausführungsbeispiel eines Vibrationsschweißkopfs 210 gezeigt, welcher sich von den beiden vorbeschriebenen Ausführungsbeispielen einerseits durch eine abgewandelte Übertragung der Taumelbewegung des Exzenters 236 auf den Schwingkopf 224 bezieht, während andererseits zusätzlich die Möglichkeit der Auswuchtung des Vibrationsschweißkopfs derart, daß praktisch keine äußeren Vibrationen am Gehäuse des Vibrationsschweißkopfs mehr feststellbar sind, veranschaulicht ist. In den Zeichnungsfiguren 6 und 7 sind die den Bauteilen in den Ausführungsbeispielen gemäß den Figuren 2 bis 4 oder 5 entsprechenden Bauteile mit den gleichen Bezugszeichen versehen, wobei lediglich die erste Ziffer "1" ersetzt ist durch eine "2", so daß es - zur Vermeidung unnötiger Wiederholungen - genügt, in der nachstehenden Beschreibung nur die gegenüber den bereits beschriebenen Ausführungsbeispielen getroffenen Abwandlungen zu beschreiben, während für die übereinstimmenden Ausgestaltungen auf die vorausgehende Beschreibung verwiesen werden kann.

Der auf das Ende der Verbindungswelle 222 aufgekeilte, auf seinem äußeren Umfang zylindrische Exzenter 236 trägt beim Vibrationsschweißkopf 210 - über zwischengeschaltete Wälzkörper 242 - einen geschlossenen Übertragungsring 254, von dem integral ein langgestrecktes und im dargestellten Fall als nach Art einer Blattfeder in sich federnd verbiegbare Koppelstange 256 ausgebildetes Koppelglied radial in Richtung zur Blattfeder 226a und durch einen Durchbruch 258 im Schwingkopf 224 und einen mit diesem fluchtenden Durchbruch 260 in der Blattfeder in einen - ebenfalls integral angesetzten Befestigungsschuh 262 - vortritt, welcher mit der Blattfeder 226a und dem Schwingkopf 224 starr verschraubt ist. Wenn der Exzenter 236 umläuft, wird seine Taumelbewegung über den Übertragungsring 254, die Koppelstange 256 und den Befestigungsschuh 262 auf den Schwingkopf 224 übertragen, wobei die rechtwinklig zur Schwingungsrichtung des Schwingkopfs 224 verlaufende Bewegungskomponente des Exzenters 236 und somit des Übertragungsrings 254 die Koppelstange 256 abwechselnd gegensinnig federnd durchbiegt.

Grundsätzlich wäre auch eine gelenkige Anlenkung der Koppelstange 256 am Befestigungsschuh 262 oder den Schwingkopf 224 - z.B. durch Anordnung eines Lagerauges am übertragungsringabgewandten Ende der Koppelstange 256 und Lagerung des Lagerauges auf einem im Befestigungsschuh 260 oder im Schwingkopf 224 gehaltenen Lagerbolzen - denkbar. Die Koppelstange 256 wäre dann funktionell mit der Kurbelstange eines normalen Kurbeltriebs vergleichbar und müßte dann auch nicht elastisch verbiegbar ausgebildet sein.

Grundsätzlich ist der Vibrationsschweißkopf 210 im bisher beschriebenen Umfang bereits funktionsfähig. Zum Ausgleich der durch die hochfrequenten Oszillationsbewegungen des Schwingkopfs 224 im Vibrationsschweißkopf angeregten Schwingungen ist beim dargestellten Ausführungsbeispiel zusätzlich ein Schwingungs-Ausgleichssystem verwirklicht, welches mit gleicher Frequenz und gleichen schwingenden Massen wie das beschriebene Antriebssystem des Schwingkopfs 224 um 180° phasenversetzt schwingt. Hierfür sind in parallelem Abstand über den Blattfedern 226a, 226b gleichartig bemessene Blattfedern 266a, 266b über Abstandsstücke 268a, 268b antriebsmotorseitig mit dem Gehäuse 212 verschraubt. Auf dem vorderen Ende der Verbindungswelle 222 ist noch vor dem Exzenter 236 ein weiterer Exzenter 270 aufgekeilt, der in seinen Abmessungen und seiner Exzentrizität dem Exzenter 236 entspricht, dabei jedoch um 180° versetzt auf der Verbindungswelle 226 aufgekeilt ist. Auf diesem Exzenter 270 ist - völlig analog zum Antriebssystem des Schwingkopfs 224 - über Wälzkörper 242 ein Übertragungsring 272 gelagert, an dem integral eine elastisch verbiegbare Koppelstange 274 angesetzt ist, die ihrerseits integral mit einem Befestigungsschuh 276 verbunden ist. Dieser Befestigungsschuh ist an einer schwingenden Ausgleichsmasse 278 angeschraubt, welche andererseits an den schwingkopfseitigen Enden der Blattfedern 266a, 266b befestigt ist. Da die elastisch verbiegbare Koppelstange 274 in entgegengesetzer Richtung wie die Koppelstange 256 weist und die Exzenter 236, 270 - wie erwähnt - um 180° versetzt auf der Verbindungswelle 222 angeordnet sind, schwingt die Ausgleichsmasse 278 bei angetriebener Verbindungswelle 222 zwangsläufig mit gleicher Frequenz aber gegensinnig zum Schwingkopf 224. Wenn nun noch die Masse der Ausgleichsmasse 278 entsprechend der Masse des Schwingkopfs 224 und der bei laufendem Motor 260 mit dem Schwingkopf 224 schwingenden Masse ist, wird eine vollständige Auswuchtung des Vibrationsschweißkopfs erzielt.

Durch die Ineinanderschachtelung der beiden Schwingungssysteme des Schwingkopfs 224 und der Ausgleichsmasse 278 wird das Bauvolumen des Vibrationsschweißkopfs 210 gegenüber einem nicht ausgewuchteten Vibrationsschweißkopf kaum vergrößert, so daß also auch weiter die angestrebte Kompaktheit erhalten bleibt.

Es ist ersichtlich, daß die beschriebenen Vibrationsschweißköpfe 110 bzw. 210 sehr kompakt bauen, so daß sie und - erforderlichenfalls - weitere gleichartige Vibrationsschweißköpfe 110 bzw. 210 jeweils gesondert über zwischengeschaltete Vorschubzylinder an stativartigen Halterungen in räumlich beliebig wählbare Richtungen einstellbar in einem gemeinsamen Gestell einbaubar ist bzw. sind, in welchem andererseits ein Aufnahmewerkzeug für ein oder mehrere starr zu halternde Basisbauteil(e) angeordnet sind, auf welchem bzw. welchen mittels des Vibrationsschweißkopfes 110 oder 210 bzw. der Vibrationsschweißköpfe dann kleinere Einzelbauteile - gegebenenfalls in unterschiedlichen Verbindungsebenen - befestigt werden sollen.

Andererseits ist die erfindungsgemäße Vorrichtung nicht auf die Verschweißung kleinerer Bauteile miteinander oder einem größeren Bauteil beschränkt. Durch in der Größe und Leistung entsprechend angepaßte Ausgestaltung ist sie durchaus auch für die Vibrationsschweißung größerer Bauteile einsetzbar, wobei dann alternativ auch daran gedacht werden kann, anstelle eines entsprechend vergrößerten und in der Leistung erhöhten Vibrationsschweißkopfs mehrere Vibrationsschweißköpfe der bechriebenen Art am Aufnahmewerkzeug für den in Schwingungen zu versetzenden Bauteil angreifen zu lassen. Dabei muß dann lediglich sichergestellt werden, daß die Schweißköpfe in gleicher Schweißrichtung mit gleicher Frequenz und Amplitude synchron arbeiten.

## Patentansprüche

1. Vorrichtung (10) zur Verbindung wenigstens eines Bauteils mit einem weiteren starr gehaltenen Bauteil mittels Vibrationsschweißung (110; 210), mit einem Vibrationsschweißkopf mit einem Antriebsmotor (116; 216), dessen Abtriebswelle mit einem Exzenterantrieb gekoppelt ist, welcher die Rotationsenergie des Antriebsmotors (116; 216) in eine zwangsläufige, oszillierende Schwingungsbewegung eines im Rahmen der vorgesehenen Arbeitsamplitude schwingungsfähig am Vibrationsschweißkopf (110; 210) gehalterten Aufnahmewerkzeugs für den mit dem starr gehalterten Bauteil zu verbindenen Bauteil umsetzt, wobei dem schwingend angetriebenen Aufnahmewerkzeug ein Aufnahmewerkzeug für den starr zu halternden Bauteil gegenüberstehend angeordnet und eine Vorschubeinheit vorgesehen ist, mittels welcher die Aufnahmewerkzeuge in Richtung aufeinanderzu zustellbar und voneinanderweg zurückziehbar sind,
**dadurch gekennzeichnet**,
daß der Vibrationsschweißkopf (110; 210) ein massives langgestrecktes Gehäuse (112; 212) aufweist, auf dessen einer Stirnseite der Antriebsmotor (116; 216) und vor dessen anderer Stirnseite ein mit dem Aufnahmewerkzeug für den zu verbindenden Bauteil bestückbarer Schwingkopf (124; 224) mittels wenigstens zweier langgestreckter Blattfedern (126a, 126b; 226a, 226b) gehaltert ist, deren Enden einerseits auf gegenüberliegenden Seiten des Schwingkopfs 124; 224) und andererseits im antriebsmotorzugewandten Endbereich des Gehäuses 112; 212) befestigt sind, und daß die Abtriebswelle 118; 218) des Antriebsmotors (116; 216) über eine durch das Gehäuse (112; 212) geführte Verbindungswelle (122; 222) mit dem vor die motorabgewandte Stirnseite des Gehäuses (112; 212) ins Innere des Schwingkopfs (124; 224) geführten Exzenterantrieb verbunden ist.

2. Vorrichtung nach Anspruch 1, dadurch gekennzeichnet, daß der an seinem Umfang zylindrisch ausgeführte Exzenter (136) des Exzenterantriebs drehfest auf dem motorabgewandten, in den Schwingkopf (124) geführten Ende der drehbar im Gehäuse gelagerten Verbindungswelle (122) angeordnet ist und auf seinem äußeren Umfang wenigstens einen drehbar auf ihm gelagerten Nockenring (140a; 140b; 140c) trägt, dessen bzw. deren äußere zylindrische Umfangsfläche(n) an auf gegenüberliegenden Seiten im Innern des Schwingkopfs (124) parallel zu den Flachseiten der Blattfedern (126a; 126b) verlaufend ausgebildeten Druckflächen des Schwingkopfs (124) abgestützt ist bzw. sind.

3. Vorrichtung nach Anspruch 2, dadurch gekennzeichnet, daß der Nockenring bzw. die Nockenringe (140a; 140b; 140c) über Wälzkörper drehbar auf dem Exzenter (136) gelagert ist bzw. sind.

4. Vorrichtung nach Anspruch 2 oder 3, dadurch gekennzeichnet, daß zwei in Längsrichtung der Verbindungswelle (122) zueinander versetzte, unabhängig voneinander drehbare Nockenringe (140a; 140b) auf dem Exzenter (136) gelagert sind, und daß die beiden Druckflächen im Schwingkopf (124) den Nockenringen (140a; 140b) entsprechend derart seitlich zueinander versetzt sind, daß jedem Nockenring (140a; 140b) jeweils nur eine der Druckflächen zugeordnet ist.

5. Vorrichtung nach Anspruch 2 oder 3, dadurch gekennzeichnet, daß drei in Längsrichtung der Verbindungswelle (122) zueinander versetzte, unabhängig voneinander drehbare Nockenringe (140a; 140b; 140c) auf dem Exzenter (136) gelagert sind, denen im Schwingungskopf drei in Längrichtung entsprechend zueinander versetzte Druckflächen zugeordnet sind, von denen die eine, dem mittleren Nockenring (140b) zugeordnete Druckfläche an der einen Seite und die beiden anderen, den äußeren Nockenringen zugeordneten Druckflächen auf der gegenüberliegenden Seite des Schwingkopfs angeordnet sind.

6. Vorrichtung nach einem der Ansprüche 2 bis 5, dadurch gekennzeichnet, daß die Druckflächen im Schwingkopf (124) an gesondert hergestellten und demontierbar im Schwingkopf angeordneten Druckschienen (144a; 144b) vorgesehen sind.

7. Vorrichtung nach einem der Ansprüche 2 bis 6, dadurch gekennzeichnet, daß der Exzenter (136) abnehmbar und gegen Exzenter abweichende Exzentrizität austauschbar auf dem motorabgewandten Ende der Verbindungswelle (122) angeordnet ist.

8. Vorrichtung nach Anspruch 1, dadurch gekennzeichnet, daß der an seinem Umfang zylindrisch ausgeführte Exzenter (236) des Exzenterantriebes drehfest auf dem motorabgewandten, in den Schwingkopf (224) geführten Ende der drehbar im Gehäuse gelagerten Verbindungswelle (222) angeordnet ist und auf seinem äußeren Umfang wenigstens einen drehbar auf ihm gelagerten Übertragungsring (254) trägt, der über ein langgestrecktes Koppelglied mit dem Schwingkopf (224) gekoppelt ist.

9. Vorrichtung nach Anspruch 8, dadurch gekennzeichnet, daß das Koppelglied als langgestreckte Koppelstange (256) ausgebildet ist, welche über einen vorgegebenen Winkel auslenkbar am Schwingkopf (224) angeschlossen ist.

10. Vorrichtung nach Anspruch 9, dadurch gekennzeichnet, daß die Koppelstange (256) über ein Gelenk am Schwingkopf (224) angeschlossen ist.

11. Vorrichtung nach Anspruch 9, dadurch gekennzeichnet, daß die Koppelstange (256) in der Ebene der Auslenkbewegung relativ zum Schwinkopf (224) in sich elastisch verbiegbar ausgebildet und starr am Schwingkopf (224) befestigt ist.

12. Vorrichtung nach einem der Ansprüche 1 bis 11, dadurch gekennzeichnet, daß die Verbindungswelle (122; 222) über eine - vorzugsweise elastische - Kupplung (120; 220) mit der Abtriebswelle (118; 218) des Antriebsmotors (116) gekoppelt ist.

13. Vorrichtung nach einem der Ansprüche 1 bis 12, dadurch gekennzeichnet, daß die Verbindungswelle (122; 222) im Bereich zwischen ihren beiden Enden im Gehäuse (112; 212) in Wälzlagern (128a, 128b, 128c; 228a; 228b; 228c) drehbar gelagert ist.

14. Vorrichtung nach Anspruch 13, dadurch gekennzeichnet, daß die Wälzlager (128a; 128b; 128c; 228a, 228b, 228c) in beiden Lagerbereichen der Verbindungswelle beidseitig durch berührungslos abdichtende Labyrinthdichtungen (130a, 130b, 130c, 130d; 230a, 230b, 230c, 230d) gegen den Austritt von Schmiermittel für die Lager (128a, 128b, 128c; 228a, 228b, 228c) abgedichtet sind.

15. Vorrichtung nach Anspruch 13 oder 14, dadurch gekennzeichnet, daß die Verbindungswelle (122) im Bereich zwischen den beiden Lagerstellen mit einer Halterungseinrichtung (122a) zum Anbringen einer Auswuchtmasse versehen ist.

16. Vorrichtung nach einem der Ansprüche 1 bis 15, dadurch gekennzeichnet, daß zwischen der motorabgewandten Gehäuse-Stirnfläche und der dieser zugewandten Stirnfläche des Schwingkopfs (124) eine umlaufende, in einer Aufnahme des Gehäuses (112) bzw. eines dieses abschließenden Gehäusedeckels (132b) gehaltene und an der Stirnfläche des Schwingkopfs (124) bzw. einem diesen abschließenden Schwingkopf-Deckel (148) abdichtende Dichtung (146) vorgesehen ist.

17. Vorrichtung nach einem der Ansprüche 1 bis 16, dadurch gekennzeichnet, daß der Antriebsmotor (116; 216) ein Elektromotor ist, dessen Drehzahl auf die gewünschte Frequenz des Schwingkopfs (124; 224) regelbar ist.

18. Vorrichtung nach einem der Ansprüche 6 bis 17, dadurch gekennzeichnet, daß auf dem motorabgewandten Ende der Verbindungswelle (222) unmittelbar benachbart zwei Exzenter (236; 270) gleicher Exzentrizität um 180° zueinander versetzt angeordnet sind, auf denen jeweils ein Übertragungsring (254; 272) drehbar gelagert ist, und daß der Übertragungsring (272) des zweiten Exzenters (270) über ein langgestrecktes Koppelglied mit einer parallel zur Schwingungsrichtung des Schwingkopfs (224) oszillierbar gehalterten Ausgleichsmasse (278) gekoppelt ist, wobei die schwingende Ausgleichsmasse (278) im wesentlichen gleich der schwingenden Masse des Schwingkopfs (224) sowie der bei angetriebenem Vibrationsschweißkopf (210) mit dem Schwingkopf (224) schwingenden Bauteile gewählt ist.

19. Vorrichtung nach Anspruch 18, dadurch gekennzeichnet, daß die Ausgleichsmasse (278) mittels wenigstens zweier langgestreckter und in ihren Federkennwerten den den Schwingkopf (224) federnd halternden Blattfedern (226a; 226b) entsprechenden Blattfedern (266a; 266b) am Gehäuse (212) des Vibrationsschweißkopfs (210) angeordnet ist.

20. Vorrichtung nach Anspruch 19, dadurch gekennzeichnet, daß die den Schwingkopf (224) halternden Blattfedern (226a; 226b) und die die Ausgleichsmasse (278) halternden Blattfedern (266a; 266b) jeweils in parallelem Abstand und auf gegenüberliegenden Seiten des Gehäuses (212) angeordnet sind.

21. Vorrichtung nach einem der Ansprüche 1 bis 20, dadurch gekennzeichnet, daß der Vibrationsschweißkopf (110; 210) insgesamt in Richtung auf das den starr zu halternden Bauteil aufnehmenden Aufnahmewerkzeug vorschieb- und in entgegengesetzter Richtung zurückziehbar in einem Maschinengestell (12) gehaltert ist, und daß die Vorschubeinheit am Vibrationsschweißkopf (110; 210) einerseits und am Maschinengestell (12) andererseits angreift.

22. Vorrichtung nach einem der Ansprüche 1 bis 20, dadurch gekennzeichnet, daß das den beim Verbindungsvorgang starr zu halternden Bauteil aufnehmende Aufnahmewerkzeug in Gestell (12) der Vorrichtung (10) in Richtung auf den starr im Gestell gehalterten Vibrationsschweißkopf (110; 210) verschieblich gehaltert ist, und daß die Vorschubeinheit am Gestell (12) einerseits und dem den starr zu halternden Bauteil aufnehmenden Aufnahmewerkzeug andererseits angreift.

## Claims

1. Apparatus (10) for bonding at least one component to an additional, rigidly held component by means of vibration welding (110; 210), with a vibration welding head with a driving motor (116; 216) whose shaft is coupled to a cam drive, which converts the rotational energy of the driving motor (116; 216) into a positive, oscillating vibrational movement of a holding tool which holds the component to be bonded to the rigidly held component and which is mounted for vibration on the vibration welding head (112; 210) within the set working amplitude, a holding tool for the component to be held rigidly being disposed opposite the vibrationally driven holding tool, and a feed unit being provided by means of which the holding tools can be advanced toward one another and backed off from one another,
characterized in that the vibration welding head (110; 210) has a massive, elongated housing (112; 212) on whose one face the driving motor (116; 216) and in front of whose other face a vibrator head (124; 224), which can be equipped with the holding tool for the component to be bonded, are mounted on at least two elongated leaf springs (126a, 126b; 226a, 226b) whose extremities are fastened on the one hand to opposite sides of the vibrator head (124; 224) and on the other hand to the end part of the housing (112; 212) adjacent the driving motor,
and that the shaft (118; 218) of the driving motor (116; 216) is connected to the cam drive by a connecting shaft (122; 222) extending from the face of the driving motor into the interior of the vibrator head (124; 224).

2. Apparatus according to claim 1, characterized in that the cam (136) of the cam drive, which has a cylindrical circumference, is disposed fixedly on the end of the connecting shaft (122) which is journaled in the housing at its end remote from the driving motor and carried into the vibrator head (124), and bears on its outer circumference at least one cam ring (140a; 140b; 140c) mounted for rotation thereon, whose outer cylindrical circumferential surface(s) is (are) held against abutment surfaces of the vibrator head (124) which are formed on opposite sides inside of the vibrator head (124) and run parallel to the flat sides of the leaf springs (126a; 126b).

3. Apparatus according to claim 2, characterized in that the cam ring or cam rings (140a; 140b; 140c) are journaled on roller bodies on the cam (136).

4. Apparatus according to claim 2 or 3, characterized in that two cam rings offset from one another in the lengthwise direction of the connecting shaft (122) and rotatable independently of one another are mounted for rotation on the cam (136), and that the two abutment surfaces are offset laterally from one another corresponding to the cam rings (140a; 140b) such that only one of the abutment surfaces is associated with each cam ring (140a; 140b).

5. Apparatus according to claim 2 or 3, characterized in that three cam rings (140a; 140b; 140c) are journaled on the cam (136) which are offset from one another in the longitudinal direction of the connecting shaft, and with them three abutment surfaces offset accordingly in the lengthwise direction from one another in the longitudinal direction are associated, the one abutment surface of which, associated with the middle cam ring (140b), being disposed on the one side and the two other abutment surfaces associated with the outer cam rings disposed on the opposite side of the vibrator head.

6. Apparatus according to any one of claims 2 to 5, characterized in that the abutment surfaces in the vibrator head (124) are provided on separately made abutment blocks (144a; 144b) disposed removably in the vibrator head.

7. Apparatus according to any one of claims 2 to 6, characterized in that the cam is removable and replaceable with a cam of different excentricity at the driving-motor remote end of the connecting shaft (122).

8. Apparatus according to claim 1, characterized in that the cam (236) of the cam drive, which is made cylindrical on its circumference, is disposed for co-rotation on the driving motor-remote end of the connecting shaft (222), which is journaled in the housing and bears journaled on its outer circumference at least one transmission ring (254) which is coupled by an elongated coupling member to the vibrator head (224).

9. Apparatus according to claim 8, characterized in that the coupling member is configured as an elongated coupling rod (256) which is connected to the vibrator head for deflection over a given angle.

10. Apparatus according to claim 9, characterized in that the coupling rod (256) is connected to the vibrator head (224) through an articulation.

11. Apparatus according to claim 9, characterized in that the coupling rod (256) is configured to be resiliently flexible in the plane of the deflection movement relative to the vibrator head (224) and is fixedly fastened to the vibrator head (224).

12. Apparatus according to any one of claims 1 to 11, characterized in that the connecting shaft (122; 222) is coupled through a - preferably resilient - coupling (120; 220) to the driven shaft (118; 218) of the driving motor (116).

13. Apparatus according to any one of claims 1 to 12, characterized in that the connecting shaft (122; 222) is journaled for rotation in the housing in the area between its two ends on rolling bearings (128a;128b; 128c; 228a; 228b; 228c).

14. Apparatus according to claim 13, characterized in that the rolling bearings (128a;128b; 128c; 228a; 228b; 228c).are sealed by contactlessly sealing labyrinth packings (120a, 130b, 130c, 130d; 230a, 230b, 230c, 230d) against the loss of lubricant for the bearings (128a, 128b, 128c; 228a, 228b, 228c).

15. Apparatus according to claim 13 or 14, characterized in that the connecting shaft (122) is provided in the area between the two bearing points with a mounting system (122a) for the attachment of a counterweight.

16. Apparatus according to any one of claims 1 to 15, characterized in that, between the housing face remote from the driving motor and the face of the vibrator head (124) confronting it, a circumferential seal (146) is provided which is held in a recess in the housing (112) or in a housing cover (132b) closing the housing, and seals against the face of the vibrator head (124) or a vibrator head cover (148), respectively.

17. Apparatus according to any one of claims 1 to 16, characterized in that the driving motor (116; 216) is an electric driving motor whose rotatory speed can be set to the desired frequency of the vibrator head (124; 224).

18. Apparatus according to any one of claims 6 to 17, characterized in that, on the end of the connecting shaft (222) remote from the driving motor, directly side by side, two cams (236; 270) of equal excentricity offset 180° from one another are disposed, on each of which a transmission ring (254; 272) is journaled, and that the transmission ring (272) of the second cam (270) is coupled through an elongated coupling means with a counterweight (278) mounted for oscillation parallel to the sense of oscillation of the vibrator head (224), the vibrating mass of the vibrator head (224) and of the components being chosen so as to be substantially equal to the vibrating mass of the vibrator head and of the components vibrating with the vibrator head (224) when the vibration welding head is driven.

19. Apparatus according to claim 18, characterized in that the counterweight (278) is disposed on the housing (212) of the vibration welding head (210) by means of at least two elongated leaf springs (226a; 226b) corresponding in their spring characteristics to the leaf springs (226a; 226b) resiliently holding the vibrator head (224).

20. Apparatus according to claim 19, characterized in that the leaf springs (226a; 226b) holding the vibrator head and the leaf springs (266a; 266b) holding the counterweight are disposed parallel and on opposite sides of the housing (212).

21. Apparatus according to any one of claims 1 to 20, characterized in that the vibration welding head (110; 210) is mounted in a machine frame (12) for advancement as a whole toward the holding tool holding the component that is to be rigidly mounted and for retraction in the opposite direction, and that the advancing unit attacks the vibration welding head (110; 210) on the one hand and the machine frame (12) on the other.

22. Apparatus according to any one of claims 1 to 20, characterized in that the holding tool receiving the component that is to be held rigidly in the frame (12) during the bonding process is mounted for displacement toward the vibration welding head (110; 210) held rigidly in the frame, and that the advancing unit acts on the frame (12) and the holding tool holding the component that is to be held rigidly.

## Revendications

1. Dispositif (10) pour l'assemblage par soudage par vibrations d'au moins un élément avec un autre élément tenu rigidement, comportant une tête de soudage par vibrations (110 ; 210) comportant un moteur d'entraînement (116 ; 216) dont l'arbre de sortie est accouplé avec un entraînement excentrique qui transforme l'énergie de rotation du moteur d'entraînement (116 ; 216) en un mouvement oscillatoire forcé d'un outil récepteur monté sur la tête de soudage par vibrations (110 ; 210) de façon à pouvoir osciller dans le cadre de l'amplitude de travail prévue et destiné à recevoir l'élément à assembler avec l'élément tenu rigidement, dans lequel, en face de l'outil récepteur soumis à oscillation, est placé un outil récepteur pour l'élément à monter rigidement, et il est prévu un bloc d'avance qui permet d'avancer les outils récepteurs en direction l'un de l'autre et de les reculer en les éloignant l'un de l'autre,
caractérisé par le fait
que la tête de soudage par vibrations (110 ; 210) présente un corps massif allongé (112 ; 212) sur une face frontale duquel est monté le moteur d'entraînement (116 ; 216) et devant l'autre face frontale duquel une tête oscillante (124 ; 224) pouvant être équipée de l'outil récepteur de l'élément à assembler est montée au moyen d'au moins deux ressorts lames allongés (126a, 126b ; 226a, 226b) dont les extrémités sont fixées d'un côté sur des côtés opposés de la tête oscillante (124 ; 224) et de l'autre côté dans la zone d'extrémité du corps (112, 212) dirigée vers le moteur d'entraînement, et que l'arbre de sortie (118 ; 218) du moteur d'entraînement (116 ; 216) est relié par un arbre de liaison (122 ; 222) traversant le corps (112, 212) à l'entraînement excentrique, qui va devant la face frontale du corps (112 ; 212) opposée au moteur et entre dans la tête oscillante (124 ; 224).

2. Dispositif selon la revendication 1, caractérisé par le fait que l'excentrique (136), cylindrique sur son pourtour, de l'entraînement excentrique est monté sans liberté de rotation sur l'extrémité opposée au moteur et entrant dans la tête oscillante (124) de l'arbre de liaison (122) monté tournant dans le corps et porte sur son pourtour extérieur au moins un anneau came (140a, 140b, 140c) monté tournant sur lui dont la ou les surface(s) périphérique(s) extérieure(s) cylindrique(s) s'appuie(nt) sur des surfaces de pression de la tête oscillante (124) faites sur des côtés opposés à l'intérieur de la tête oscillante (124) et s'étendant parallèlement aux faces plates des ressorts lames (126a, 126b).

3. Dispositif selon la revendication 2, caractérisé par le fait que l'anneau came ou les anneaux cames (140a, 140b, 140c) est ou sont monté(s) tournant(s) sur l'excentrique par l'intermédiaire de corps roulants.

4. Dispositif selon l'une des revendications 2 et 3, caractérisé par le fait que deux anneaux cames (140a, 140b), décalés l'un de l'autre dans la direction longitudinale de l'arbre de liaison (122) et pouvant tourner indépendamment l'un de l'autre, sont montés sur l'excentrique (136), et que les deux surfaces de pression faites dans la tête oscillante (124) sont décalées latéralement l'une de l'autre de façon correspondant aux anneaux cames (140a, 140b) de manière telle qu'à chaque anneau came (140a, 140b) ne soit jamais associée qu'une seule des surfaces de pression.

5. Dispositif selon l'une des revendications 2 et 3, caractérisé par le fait que sur l'excentrique (136) sont montés trois anneaux cames (140a, 140b, 140c) décalés les uns des autres dans la direction longitudinale de l'arbre de liaison (122) et pouvant tourner indépendamment les uns des autres, auxquels sont associées dans la tête oscillante trois surfaces de pression décalées les unes des autres de façon correspondante dans la direction longitudinale dont une, associée à l'anneau came du milieu (140b), est située sur un côté de la tête oscillante et les deux autres, associées aux anneaux cames extérieurs, sont situées sur le côté opposé de la tête oscillante.

6. Dispositif selon l'une des revendications 2 à 5, caractérisé par le fait que les surfaces de pression situées dans la tête oscillante (124) sont prévues sur des barres de pression (144a, 144b) fabriquées séparément et montées de manière démontable dans la tête oscillante.

7. Dispositif selon l'une des revendications 2 à 6, caractérisé par le fait que l'excentrique (136) est monté amovible et remplaçable par un excentrique d'excentricité différente sur l'extrémité de l'arbre de liaison (122) opposée au moteur.

8. Dispositif selon la revendication 1, caractérisé par le fait que l'excentrique cylindrique sur son pourtour (236) de l'entraînement excentrique est monté sans liberté de rotation sur l'extrémité opposée au moteur et entrant dans la tête oscillante (224) de l'arbre de liaison (222) monté tournant dans le corps et porte sur son pourtour extérieur au moins un anneau de transmission (254) monté tournant sur lui qui est accouplé avec la tête oscillante (224) par un élément d'accouplement allongé.

9. Dispositif selon la revendication 8, caractérisé par le fait que l'élément d'accouplement est une barre allongée (256) qui est jointe à la tête oscillante (224) avec possibilité de déviation d'un angle donné.

10. Dispositif selon la revendication 9, caractérisé par le fait que la barre d'accouplement (256) est jointe à la tête oscillante (224) par une articulation.

11. Dispositif selon la revendication 9, caractérisé par le fait que la barre d'accouplement (256) est flexible élastiquement par rapport à la tête oscillante (224) dans le plan du mouvement de déviation et fixée rigidement à la tête oscillante (224).

12. Dispositif selon l'une des revendications 1 à 11, caractérisé par le fait que l'arbre de liaison (122 ; 222) est accouplé avec l'arbre de sortie (118 ; 218) du moteur d'entraînement (116) par un accouplement (de préférence élastique) (120 ; 220).

13. Dispositif selon l'une des revendications 1 à 12, caractérisé par le fait que l'arbre de liaison (122 ; 222) est monté tournant dans le corps (112 ; 212) dans des roulements (128a, 128b, 128c ; 228a ; 228b ; 228c) dans la zone entre ses deux extrémités.

14. Dispositif selon la revendication 13, caractérisé par le fait que les roulements (128a, 128b, 128c ; 228a, 228b, 228c) situés dans les deux zones d'appui de l'arbre de liaison sont pourvues des deux côtés de joints à labyrinthe assurant l'étanchéité sans contact (130a, 130b, 130c, 130d ; 230a, 230b, 230c, 230d) destinés à empêcher la sortie de lubrifiant de ces roulements (128a, 128b, 128c ; 228a, 228b, 228c).

15. Dispositif selon l'une des revendications 13 et 14, caractérisé par le fait que l'arbre de liaison (122) est pourvu, dans la zone entre ses deux points d'appui, d'un dispositif de fixation (122a) pour le montage d'une masse d'équilibrage.

16. Dispositif selon l'une des revendications 1 à 15, caractérisé par le fait qu'entre la face frontale du corps opposée au moteur et la face frontale dirigée vers celle-ci de la tête oscillante (124) est prévu un joint circonférentiel (146) monté dans un logement du corps (112) ou d'un couvercle (132b) fermant ce dernier et assurant l'étanchéité sur la face frontale de la tête oscillante (124) ou sur un couvercle (148) fermant cette dernière.

17. Dispositif selon l'une des revendications 1 à 16, caractérisé par le fait que le moteur d'entraînement (116 ; 216) est un moteur électrique dont la vitesse de rotation est réglable à la fréquence désirée de la tête oscillante (124 ; 224).

18. Dispositif selon l'une des revendications 6 à 17, caractérisé par le fait que sur l'extrémité de l'arbre de liaison (222) opposée au moteur sont placés à proximité immédiate l'un de l'autre et décalés l'un de l'autre de 180° deux excentriques (236, 270) de même excentricité sur chacun desquels est monté tournant un anneau de transmission (254, 272), et que l'anneau de transmission (272) du deuxième excentrique (270) est accouplé par un élément d'accouplement allongé avec une masse d'équilibrage (278) montée de façon à pouvoir osciller parallèlement à la direction d'oscillation de la tête oscillante (224), cette masse d'équilibrage oscillante (278) étant choisie sensiblement égale à la masse oscillante de la tête oscillante (224) et des éléments qui oscillent avec la tête oscillante (224) lorsque la tête de soudage par vibrations (210) est entraînée.

19. Dispositif selon la revendication 18, caractérisé par le fait que la masse d'équilibrage (278) est montée sur le corps (212) de la tête de soudage par vibrations (210) au moyen d'au moins deux ressorts lames (266a, 266b) dont les caractéristiques d'élasticité correspondent à celles des ressorts lames (226a, 226b) qui tiennent élastiquement la tête oscillante (224).

20. Dispositif selon la revendication 19, caractérisé par le fait que les ressorts lames (226a, 226b) qui tiennent la tête oscillante (224) et les ressorts lames (266a, 266b) qui tiennent la masse d'équilibrage (278) sont placés parallèlement les uns aux autres et sur des côtés opposés du corps (212).

21. Dispositif selon l'une des revendications 1 à 20, caractérisé par le fait que la tête de soudage par vibrations (110 ; 210) est montée dans un bâti de machine (12) de façon à pouvoir être en totalité avancée en direction de l'outil récepteur recevant l'élément à monter rigidement et reculée dans la direction opposée, et que le bloc d'avance attaque d'un côté la tête de soudage par vibrations (110 ; 210) et de l'autre côté le bâti de machine (12).

22. Dispositif selon l'une des revendications 1 à 20, caractérisé par le fait que l'outil récepteur recevant l'élément à monter rigidement pour l'opération d'assemblage est monté dans le bâti (12) du dispositif (10) de façon à être mobile en direction de la tête de soudage par vibrations (110 ; 210) montée rigidement dans le bâti, et que le bloc d'avance attaque d'un côté le bâti (12) et de l'autre côté l'outil récepteur recevant l'élément à monter rigidement.
